# EUROPEAN PATENT APPLICATION

(11) **EP 4 796 760 A1**
(43) Date of publication of application: **26.08.2026**
(21) Application number: 26158329.8
(22) Date of filing: 12.02.2026
(51) Int. Cl.: F01D 11/08, F01D 25/12, F01D 11/24

(54) **AIR-COOLED TURBINE COMPONENT, AND BLADE OUTER AIR SEAL SEGMENTS**

(30) Priority: 12.02.2025 US 202563757730 P
(71) Applicant: RTX Corporation, Farmington, CT 06032 (US)
(72) Inventor: O'CONNOR, Gregory A., Portland, Maine 04101 (US); LUTJEN, Paul M., Kennebunkport, Maine 04101 (US); PERALTA TRINIDAD, Pedro, Caguas 00725 (PR); MONGILLO, Dominic J., JR., West Hartford, Connecticut 06107 (US); PLANTE, James R., E. Waterboro, Maine 04030 (US); SWIFT, Anthony B., Waterboro, Maine 04087 (US)
(74) Representative: Dehns

(57) **Abstract**

A turbine (62) component includes a body including an outer passage wall (126) and an inner passage wall (128) forming an internal cooling passage (116). The internal cooling passage (116) extends lengthwise through the body between and to an upstream end (120) of the internal cooling passage (116) and a downstream end (122) of the internal cooling passage (116) along a lengthwise axis (118). The body forms a flow augmentation feature assembly (134) at the inner passage wall (128) within the internal cooling passage (116). The flow augmentation feature assembly (134) consecutively includes a first flow augmentation feature pattern (138A) extending lengthwise along a first axial portion (144A) of the internal cooling passage (116) at the upstream end (120), a second flow augmentation feature pattern (138B) extending lengthwise along a second axial portion (144B) of the internal cooling passage (116), and a third flow augmentation feature pattern (138C) extending lengthwise along a third axial portion (144A) of the internal cooling passage (116) disposed at the upstream end (120). The second flow augmentation feature pattern (138B) is different than the first flow augmentation feature pattern (138A) and the third flow augmentation feature pattern (138C).

Blade outer air seal (BOAS) segments are provided as the air-cooled turbine component.

## Description

This invention was made with Government support under Contract N00019-21-G-0005, D.O. N00019-23 F-0019 awarded by the United States Navy. The Government has certain rights in this invention.

### BACKGROUND

### 1. Technical Field

This disclosure relates generally to gas turbine engines for aircraft propulsion systems and, more particularly, to blade outer air seal (BOAS) assemblies for a turbine section of a gas turbine engine.

### 2. Background Information

Gas turbine engines for aircraft propulsion systems may typically include a turbine section including at least one bladed rotor configured to drive rotation of an engine spool in response to a combustion gas flow. This bladed rotor may be surrounded by a blade outer air seal (BOAS) assembly configured to facilitate combustion gas path sealing at blade tips of the bladed rotor. Various BOAS assembly configurations are known in the art. While these known BOAS assembly configurations may be suitable for their intended purposes, there is always room in the art for improvement.

### SUMMARY

According to an aspect of the present invention, an air-cooled turbine component (e.g., a BOAS segment according to any of the aspects or embodiments described herein) includes a body (e.g., a segment body) extending between and to a first (e.g., outer) radial surface and a second (e.g., inner) radial surface relative to a centerline axis (e.g., of the turbine or about which the turbine component extends). The body includes an outer passage wall and an inner passage wall forming an internal cooling passage between the first radial surface and the second radial surface. The internal cooling passage extends lengthwise through the body between and to an upstream end of the internal cooling passage (e.g., upstream relative to an intended direction of flow of cooling air or fluid) and a downstream end of the internal cooling passage along a lengthwise axis of the internal cooling passage. The body forms a flow augmentation feature assembly at (e.g., in or on) the inner passage wall within the internal cooling passage. The flow augmentation feature assembly includes a first flow augmentation feature pattern, a second flow augmentation feature pattern, and a third flow augmentation feature pattern. The first flow augmentation feature pattern is disposed at (e.g., proximate or extending from) the upstream end. The first flow augmentation feature pattern extends lengthwise along a first axial portion of the internal cooling passage relative to the lengthwise axis. The second flow augmentation feature pattern is disposed axially between the first flow augmentation feature pattern and the third flow augmentation feature pattern and extending lengthwise along a second axial portion of the internal cooling passage relative to the lengthwise axis. The second flow augmentation feature pattern is different than the first flow augmentation feature pattern and the third flow augmentation feature pattern. The third flow augmentation feature pattern is disposed at (e.g., proximate or extending from) the downstream end. The third flow augmentation feature pattern extends lengthwise along a third axial portion of the internal cooling passage relative to the lengthwise axis.

In any of the aspects or embodiments described above and herein, the body may extend circumferentially between a first circumferential end and a second circumferential end relative to the centerline axis, and the internal cooling passage may extend lengthwise between the first circumferential end and the second circumferential end.

In any of the aspects or embodiments described above and herein, the internal cooling passage may have a width substantially orthogonal to the lengthwise axis and the width may decrease in a lengthwise direction from the upstream end to the downstream end.

In any of the aspects or embodiments described above and herein, the internal cooling passage may have a height between the outer passage wall and the inner passage wall, and the flow augmentation feature assembly may extend between 10 percent and 30 percent of the height from the inner passage wall toward the outer passage wall.

In any of the aspects or embodiments described above and herein, the first flow augmentation feature pattern may be the same as the third flow augmentation feature pattern.

In any of the aspects or embodiments described above and herein, the first flow augmentation feature pattern and the third flow augmentation feature pattern may each include a plurality of chevron trip strips.

In any of the aspects or embodiments described above and herein, the second flow augmentation feature pattern may be a lattice pattern.

In any of the aspects or embodiments described above and herein, the first flow augmentation feature pattern may be different than the third flow augmentation feature pattern.

In any of the aspects or embodiments described above and herein, the internal cooling passage may have a length extending between and to the upstream end and the downstream end along the lengthwise axis, and each of the second axial portion and the third axial portion may be between 10 percent and 30 percent of the length.

In any of the aspects or embodiments described above and herein, the internal cooling passage may have a length extending between and to the upstream end and the downstream end along the lengthwise axis, and the first axial portion may be greater than 50 percent of the length.

According to another aspect of the present invention, a blade outer air seal (BOAS) segment includes a body (a segment body) extending between and to an outer radial surface and an inner radial surface relative to a BOAS axis (about which the BOAS is configured to extend). The segment body includes an outer passage wall and an inner passage wall forming an internal cooling passage between the outer radial surface and the inner radial surface. The internal cooling passage extends lengthwise through the segment body between and to an upstream end (e.g., upstream relative to an intended direction of flow of cooling air or fluid) of the internal cooling passage and a downstream end of the internal cooling passage along a lengthwise axis of the internal cooling passage. The segment body forms a flow augmentation feature assembly at the inner passage wall within the internal cooling passage. The flow augmentation feature assembly includes a first flow augmentation feature pattern and a second flow augmentation feature pattern. The first flow augmentation feature pattern is disposed at the upstream end. The first flow augmentation feature pattern extends lengthwise along a first axial portion of the internal cooling passage relative to the lengthwise axis. The first axial portion is greater than 50 percent of the length. The second flow augmentation feature pattern is disposed downstream of the first flow augmentation feature pattern and extends lengthwise along a second axial portion of the internal cooling passage relative to the lengthwise axis. The second flow augmentation feature pattern is different than the first flow augmentation feature pattern.

In any of the aspects or embodiments described above and herein, the internal cooling passage may have a width substantially orthogonal to the lengthwise axis and the width may decrease in a lengthwise direction from the upstream end to the downstream end.

In any of the aspects or embodiments described above and herein, the internal cooling passage may have a height between the outer passage wall and the inner passage wall, and the flow augmentation feature assembly may extend between 10 percent and 30 percent of the height from the inner passage wall toward the outer passage wall.

In any of the aspects or embodiments described above and herein, the segment body may form an outlet aperture at the downstream end, and the outlet aperture may extend between and to the internal cooling passage and an exterior of the segment body.

In any of the aspects or embodiments described above and herein, the flow augmentation feature assembly may further include a third flow augmentation feature pattern downstream of the second flow augmentation feature pattern, and the third flow augmentation feature pattern may be the same as the first flow augmentation feature pattern.

According to another aspect of the present invention, a blade outer air seal (BOAS) segment includes a segment body extending between and to an outer radial surface and an inner radial surface relative to a BOAS axis (about which the BOAS is configured to extend). The segment body forms an internal cooling passage between the outer radial surface and the inner radial surface. The internal cooling passage extends through the segment body between and to an upstream end of the internal cooling passage and a downstream end of the internal cooling passage. The segment body forms a flow augmentation feature assembly within the internal cooling passage. The flow augmentation feature assembly includes a first flow augmentation feature pattern and a second flow augmentation feature pattern. The first flow augmentation feature pattern is disposed at the upstream end. The first flow augmentation feature pattern is disposed at a first portion of the internal cooling passage. The second flow augmentation feature pattern is disposed axially between the first flow augmentation feature pattern and the third flow augmentation feature pattern. The second flow augmentation feature pattern is disposed at a second portion of the internal cooling passage. The second flow augmentation feature pattern is different than the first flow augmentation feature pattern and the third flow augmentation feature pattern. The third flow augmentation feature pattern is disposed at the downstream end. The third flow augmentation feature pattern is disposed at a third portion of the internal cooling passage.

In any of the aspects or embodiments described above and herein, the first flow augmentation feature pattern may be the same as the third flow augmentation feature pattern.

In any of the aspects or embodiments described above and herein, the first flow augmentation feature pattern and the third flow augmentation feature pattern may each include a plurality of chevron trip strips.

In any of the aspects or embodiments described above and herein, the second flow augmentation feature pattern may be a lattice pattern.

In any of the aspects or embodiments described above and herein, the first flow augmentation feature pattern may be different than the third flow augmentation feature pattern.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 illustrates propulsion systems for an aircraft, in accordance with one or more embodiments of the present disclosure.
FIG. 2 schematically illustrates a cutaway, side view of an aircraft propulsion system including a gas turbine engine, in accordance with one or more embodiments of the present disclosure.
FIG. 3 schematically illustrates a cutaway, side view of a portion of a turbine section of a gas turbine engine including a blade outer air seal (BOAS) assembly, in accordance with one or more embodiments of the present disclosure.
FIG. 4 schematically illustrates cutaway, side view of a BOAS segment for the BOAS assembly, in accordance with one or more embodiments of the present disclosure.
FIG. 5 schematically illustrates a cutaway, bottom view of the BOAS segment, in accordance with one or more embodiments of the present disclosure.
FIG. 6 schematically illustrates an internal cooling passage and a flow augmentation feature assembly for the BOAS segment, in accordance with one or more embodiments of the present disclosure.
FIGS. 7A-G illustrate various flow augmentation feature patterns for the flow augmentation feature assembly, in accordance with one or more embodiments of the present disclosure.
FIG. 8 schematically illustrates the internal cooling passage and another flow augmentation feature assembly for the BOAS segment, in accordance with one or more embodiments of the present disclosure.

### DETAILED DESCRIPTION

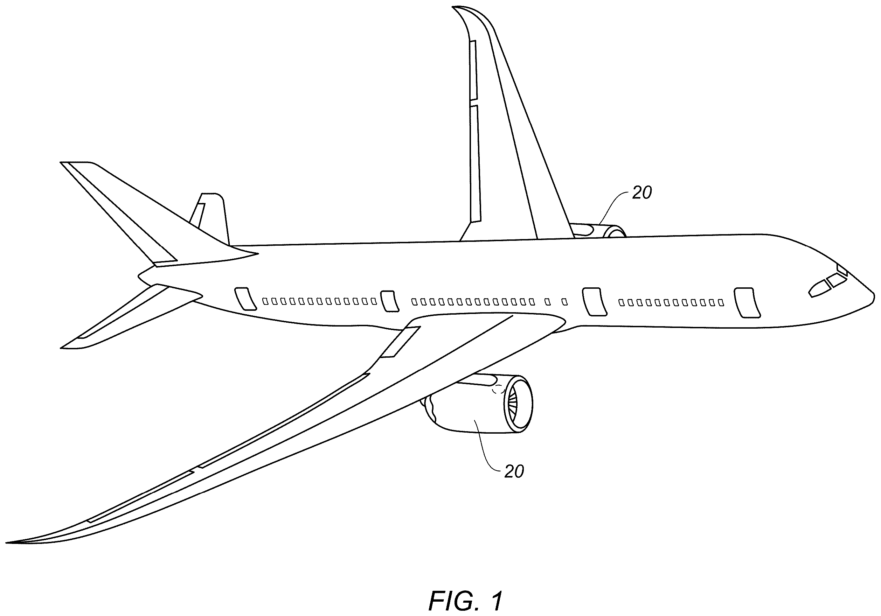

FIG. 1 illustrates a propulsion system 20 for an aircraft. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

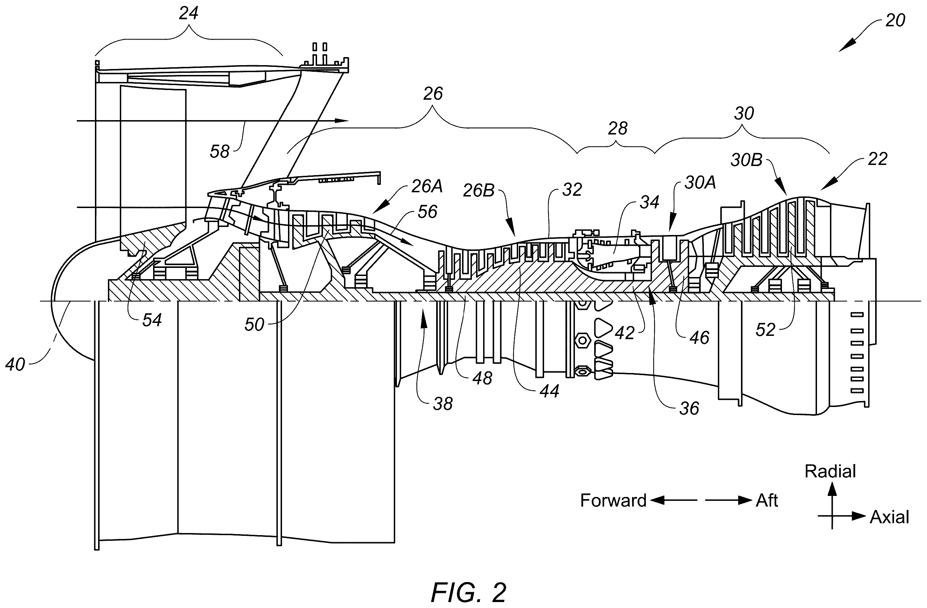

FIG. 2 schematically illustrates a cutaway, side view of the propulsion system 20. The propulsion system 20 includes a gas turbine engine 22. The gas turbine engine 22 of FIG. 2 is configured as a multi-spool turbofan gas turbine engine. However, while the following description and accompanying drawings may refer to the turbofan gas turbine engine of FIG. 2 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine.

The gas turbine engine 22 of FIG. 2 includes a fan section 24, a compressor section 26, a combustor section 28, a turbine section 30, and an engine static structure 32. The compressor section 26 includes a low-pressure compressor (LPC) 26A and a high-pressure compressor (HPC) 26B. The combustor section 28 includes a combustor 34 (e.g., an annular combustor). The turbine section 30 includes a high-pressure turbine (HPT) 30A and a low-pressure turbine (LPT) 32B.

Components of the fan section 24, the compressor section 26, and the turbine section 30 form a first rotational assembly 36 (e.g., a high-pressure spool) and a second rotational assembly 38 (e.g., a low-pressure spool) of the gas turbine engine 22. The first rotational assembly 36 and the second rotational assembly 38 are mounted for rotation about a rotational axis 40 (e.g., an axial centerline) of the gas turbine engine 22 relative to the engine static structure 32.

The first rotational assembly 36 includes a first shaft 42, a bladed first compressor rotor 44 for the high-pressure compressor 26B, and a bladed first turbine rotor 46 for the high-pressure turbine 30A. The first shaft 42 interconnects the bladed first compressor rotor 44 and the bladed first turbine rotor 46.

The second rotational assembly 38 includes a second shaft 48, a bladed second compressor rotor 50 for the low-pressure compressor 26A, a bladed second turbine rotor 52 for the low-pressure turbine 30B, and a bladed fan rotor 54 for the fan section 24. The second shaft 48 of FIG. 2 interconnects the bladed second compressor rotor 50, the bladed second turbine rotor 52, and the bladed fan rotor 54. The bladed fan rotor 54 may alternatively be connected to the second shaft 48 by a gear train (e.g., a reduction gear assembly) configured to drive rotation of the bladed fan rotor 54 at a different rotational speed than the second shaft 48. The first shaft 42 and the second shaft 48 are concentric and configured to rotate about the rotational axis 40. The present disclosure, however, is not limited to concentric configurations of the first shaft 42 and the second shaft 48.

The engine static structure 32 may include one or more engine cases, cowlings, bearing assemblies, and/or other non-rotating structures configured to house and/or support (e.g., rotationally support) components of the gas turbine engine 22 sections 24, 26, 28, 30.

In operation of the gas turbine engine 22 of FIG. 2, ambient air is directed through the fan section 24 and into a core flow path 56 (e.g., an annular flow path) and a bypass flow path 58 (e.g., an annular flow path) facilitated by rotation of the bladed fan rotor 54. Airflow along the core flow path 56 is compressed by the low-pressure compressor 26A and the high-pressure compressor 26B, mixed and burned with fuel in the combustor 34, and then directed through the high-pressure turbine 30A and the low-pressure turbine 30B. The bladed first turbine rotor 46 and the bladed second turbine rotor 52 rotationally drive the first rotational assembly 36 and the second rotational assembly 38, respectively, in response to the combustion gas flow through the high-pressure turbine 30A and the low-pressure turbine 30B. The bypass flow path 58 may be disposed outside the engine static structure 32. For example, the engine static structure 32 and an outer aircraft propulsion system housing (e.g., a nacelle) may form an annular bypass duct radially therebetween, and airflow may be directed through the annular bypass duct along the bypass flow path 58.

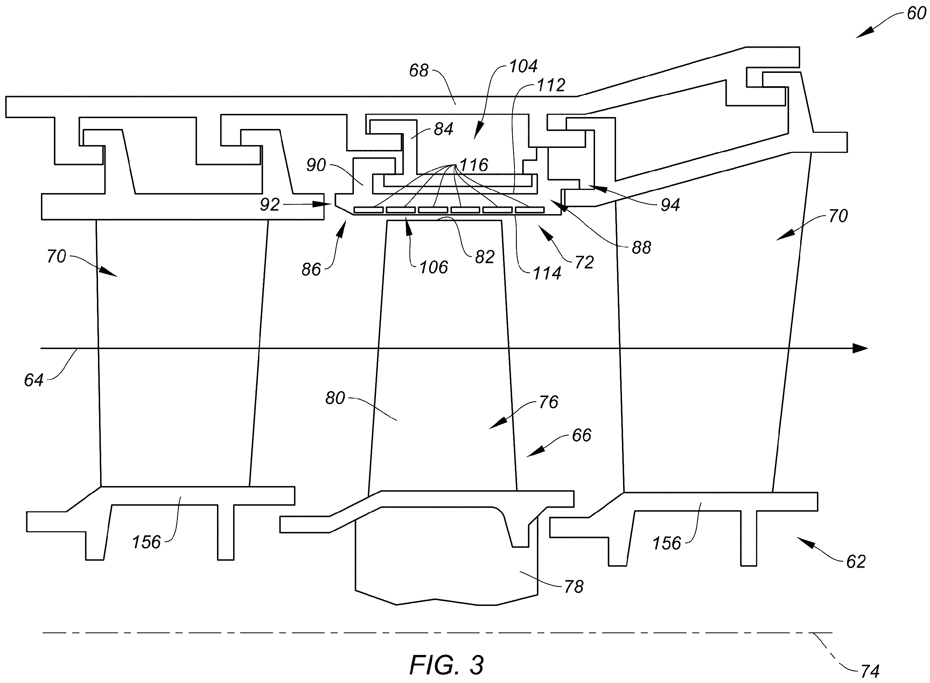

FIG. 3 schematically illustrates a cutaway, side view of a portion of a turbine section 60 for a gas turbine engine, such as the gas turbine engine 22 (see FIG. 2). The portion of the turbine section 60 illustrated in FIG. 3 includes portions of a turbine 62 such as, but not limited to, the high-pressure turbine 30A or the low-pressure turbine 30B (see FIG. 2). The turbine section 60 and its turbine 62 form a portion of a core flow path 64 of the gas turbine engine (e.g., the core flow path 56; see FIG. 2). The turbine 62 includes a bladed turbine rotor 66, a turbine case 68, one or more stator vane stages 70, and at least one blade outer air seal (BOAS) assembly 72 along the core flow path 64.

The bladed turbine rotor 66 is mounted for rotation about a rotational axis 74 of the gas turbine engine. The bladed turbine rotor 66 includes one or more rotor stages 76 (e.g., axially arrayed rotor stages). Each of the rotor stages 76 includes a rotor disk 78 and a plurality of rotor blades 80 (e.g., airfoils) disposed on and circumferentially distributed about the rotor disk 78. Each of the rotor blades 80 extends radially outward from the rotor disk 78 to a blade tip 82 at an outer radial end of each respective one of the rotor blades 80.

The turbine case 68 extends circumferentially about (e.g., completely around) the rotational axis 74. The turbine case 68 may be configured as a generally cylindrical, full-hoop case of an engine static structure (e.g., the engine static structure 32) of the gas turbine engine. The turbine case 68 may be formed by a single case body. Alternatively, the turbine case 68 may be formed by two or more case segments (e.g., circumferential segments) assembled together to form the turbine case 68 (e.g., a split case configuration). The turbine case 68 circumscribes the bladed turbine rotor 66, the stator vane stages 70, and the BOAS assembly.

The turbine 62 may include one of the stator vane stages 70 between one, more than one, or each axially adjacent pair of the rotor stages 76. The turbine 62 may additionally include stator vane stages 70 at (e.g., on, adjacent, or proximate) an upstream end and/or a downstream end of the turbine 62. Each of the stator vane stages 70 includes a plurality of stator vanes disposed within the core flow path 64 and circumferentially arrayed about the rotational axis 74. The stator vanes are configured to guide core air flow along the core flow path 64 and to direct the core air flow, for example, onto the rotor blades 80 of an immediately downstream one of the rotor stages 76.

The turbine 62 includes a BOAS assembly 72 for one, more than one, or each of the rotor stages 76. The BOAS assembly 72 is mounted on or otherwise disposed at (e.g., on, adjacent, or proximate) the turbine case 68 axially coincident with and circumscribing a respective one of the rotor stages 76. The BOAS assembly 72 forms and controls a blade tip clearance (e.g., a radial gap) between the blade tip 82 of the rotor blades 80 of a respective one of the rotor stages 76 and the BOAS assembly 72, as will be discussed in further detail below. The BOAS assembly 72, positioned in close proximity to the blade tip 82 of the passing rotor blades 80, facilitates sealing between the rotor blades 80 and the turbine case 68, thereby improving turbine 62 efficiency by reducing air flow leakage around the blade tip 82. The BOAS assembly 72 includes a BOAS support 84 and BOAS 86. The BOAS support 84 couples or otherwise secures the BOAS 86 to the turbine case 68. The BOAS 86 includes a plurality of arcuate BOAS segments 88. The BOAS segments 88 are arranged together in circumferential series about (e.g., completely around) the rotational axis 74 to form the BOAS 86.

Referring to FIGS 3-5, each of the BOAS segments 88 includes a segment body 90. The segment body 90 extends axially between and to a first axial end 92 (e.g., a forward and/or upstream axial end) of the segment body 90 and a second axial end 94 (e.g., an aft and/or downstream axial end) of the segment body 90. The segment body 90 extends circumferentially between and to a first circumferential end 96 of the segment body 90 and a second circumferential end 98 of the segment body 90. The first circumferential end 96 forms a blade arrival edge (BAE) 100 of the segment body 90. The blade arrival edge 100 may be understood as the circumferential portion of the segment body 90 at which the passing rotor blades 80 arrive first when rotating about the rotational axis 74. The second circumferential end 98 forms a blade departure edge (BDE) 102 of the segment body 90, opposite the blade arrival edge 100. The segment body 90 extends radially between and to an outer radial side 104 of the segment body 90 and an inner radial side 106 of the segment body 90. The segment body 90 forms an outer radial surface 112 and an inner radial surface 114. The segment body 90 extends radially between and to the outer radial surface 112 and the inner radial surface 114. The outer radial surface 112 is a radially outward facing surface (e.g., facing the turbine case 68 and the BOAS support 84). The inner radial surface 114 extends along and forms the inner radial side 106. The inner radial surface 114 is a radially inward facing surface disposed adjacent and facing the blade tips 82 of the passing rotor blades 80.

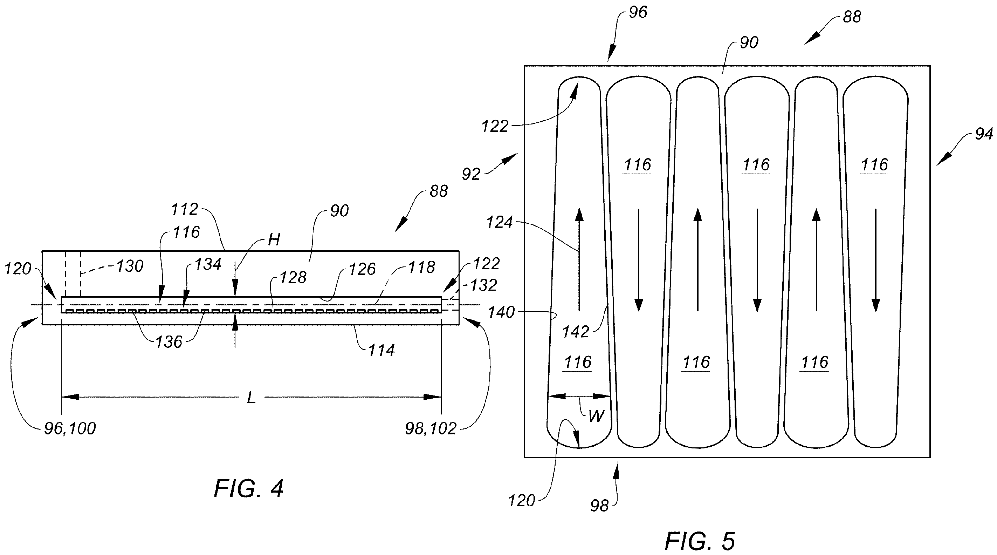

The segment body 90 forms at least one internal cooling passage 116. The segment body 90 of FIGS. 3-5 includes six internal cooling passages 116; however, the present disclosure is not limited to any particular quantity of the internal cooling passage(s) 116. The internal cooling passage 116 is disposed between (e.g., radially between) the outer radial surface 112 and the inner radial surface 114. The internal cooling passage 116 may extend through the segment body 90 in proximity to the inner radial side 106 to facilitate cooling of the segment body 90 and, in particular, portions of the segment body 90 exposed to combustion gas flowing along the core flow path 64. The internal cooling passage 116 extends lengthwise through the segment body 90 along a lengthwise axis 118. The internal cooling passage 116 extends along the lengthwise axis 118 between and to an upstream end 120 of the internal cooling passage 116 and a downstream end 122 of the internal cooling passage 116. The terms "upstream" and "downstream," used with respect to the upstream end 120 and the downstream end 122, respectively, refer to a typical direction of air flow 124 through the internal cooling passage 116 (e.g., in a lengthwise direction). The internal cooling passage 116 may extend lengthwise in the circumferential direction as shown, for example, in FIGS. 4 and 5. For example, the upstream end 120 may be disposed at (e.g., on, adjacent, or proximate) one of the first circumferential end 96 or the second circumferential end 98 and the downstream end 122 may be disposed at (e.g., on, adjacent, or proximate) the other of the first circumferential end 96 or the second circumferential end 98. The internal cooling passage 116 may alternatively extend lengthwise in the axial direction (e.g., between the first axial end 92 and the second axial end 94) or another suitable direction through the segment body 90. The internal cooling passage 116 has a length L extending in the lengthwise direction (e.g., along the lengthwise axis 118) between the upstream end 120 and the downstream end 122.

The segment body 90 forms the internal cooling passage 116 between (e.g., radially between) an outer passage wall 126 of the segment body 90 and an inner passage wall 128 of the segment body 90. The outer passage wall 126 and the inner passage wall 128 may be oriented parallel or substantially parallel to one another as shown, for example, in FIG. 4. The present disclosure, however, is not limited to this foregoing exemplary orientation of the outer passage wall 126 and the inner passage wall 128. The internal cooling passage 116 has a height H extending between (e.g., radially between) the outer passage wall 126 and the inner passage wall 128, which height H may be understood as substantially orthogonal to the lengthwise axis 118. The segment body 90 further forms the internal cooling passage 116 between a first lateral side wall 140 of the segment body 90 and a second lateral side wall 142 of the segment body 90. The internal cooling passage 116 has a width W extending between the first lateral side wall 140 and the second lateral side wall 142, which width W may be understood as substantially orthogonal to the lengthwise axis 118. As shown in FIG. 5, the width W may decrease in the lengthwise direction from the upstream end 120 to the downstream end 122. The internal cooling passage 116 is connected in fluid communication with an inlet aperture 130 and an outlet aperture 132. The inlet aperture 130 is configured to supply the air flow 124 to the internal cooling passage 116 from a pressurized air source such as, but not limited to, a compressor section (e.g., a bleed air from the compressor section 26) of the gas turbine engine. The inlet aperture 130 of FIG. 4 extends, for example, between and to the outer radial surface 112 and the internal cooling passage 116 at (e.g., on, adjacent, or proximate) the upstream end 120. The outlet aperture 132 extends between the internal cooling passage 116, at (e.g., on, adjacent, or proximate) the downstream end 122, and an exterior of the segment body 90, for example, on the first circumferential end 96 or the second circumferential end 98. The segment body 90 may additionally form one or more cooling apertures extending between intermediate portions of the internal cooling passage 116 (e.g., between the upstream end 120 and the downstream end 122) and the exterior of the segment body 90 to facilitate BOAS segment 88 cooling.

The segment body 90 additionally forms a flow augmentation feature assembly 134 on the inner passage wall 128 within the internal cooling passage 116. In some embodiments, the flow augmentation feature assembly 134 may additionally or alternatively be formed on the outer passage wall 126 within the internal cooling passage 116. The flow augmentation feature assembly 134 includes a plurality of flow augmentation features 136 such as, but not limited to, trip strips, pin fins, and other protruding flow augmentation structures, as will be discussed in further detail below. The flow augmentation feature assembly 134 (e.g., the flow augmentation features 136) projects outward (e.g., radially outward) from the inner passage wall 128 toward the outer passage wall 126 to turbulate the air flow 124 through the internal cooling passage 116 and facilitate air cooling of the segment body 90 (e.g., portions of the segment body 90 between the internal cooling passage 116 and the inner radial surface 114). For example, the flow augmentation feature assembly 134 (e.g., the flow augmentation features 136) may extend between 10 percent (10%) and 30 percent (30%) of the height H from the inner passage wall 128 toward the outer passage wall 126 to facilitate suitable turbulation of the air flow 124 while also facilitating sufficient flow rate of the air flow 124 through the internal cooling passage 116. While the present disclosure internal cooling passage 116 and flow augmentation feature assembly 134 are described herein with respect to the segment body 90, it should be understood that aspects of the present disclosure may be equally applicable to other air-cooled turbine components. For example, aspects of the present disclosure may be additionally or alternatively incorporated in air-cooled turbine components such as, but not limited to, stator vane platforms 156 of the stator vane stages 70 (see FIG. 3) to facilitate air cooling of the stator vane platforms 156.

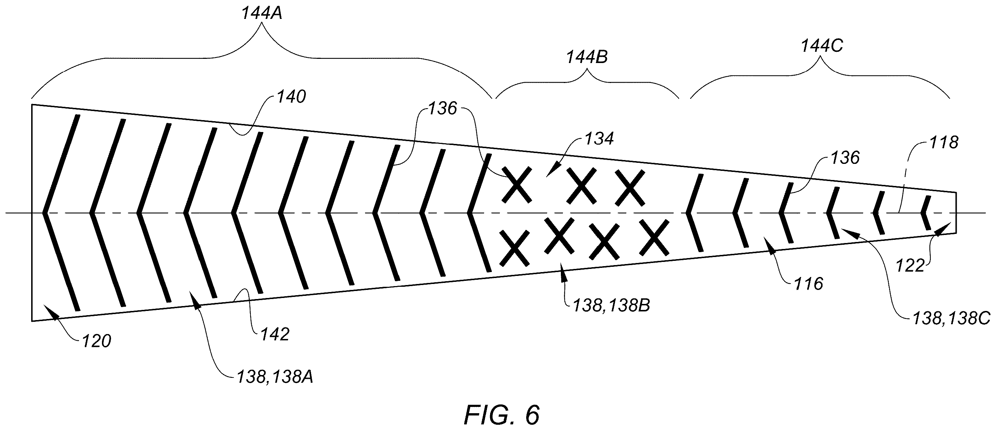

Referring to FIG. 6, the flow augmentation feature assembly 134 includes a plurality of flow augmentation feature patterns 138 of the flow augmentation features 136. The flow augmentation feature patterns 138 of FIG. 6 include a first flow augmentation feature pattern 138A and a second flow augmentation feature pattern 138B. The flow augmentation feature patterns 138 may additionally include a third flow augmentation feature pattern 138C or more than three flow augmentation feature patterns. The flow augmentation feature patterns 138, 138A-C are arranged axially sequentially within the internal cooling passage 116, for example, relative to the lengthwise axis 118 and/or along a streamwise direction of air flow through the internal cooling passage 116 (e.g., from the upstream end 120 to the downstream end 122). The first flow augmentation feature pattern 138A is disposed at (e.g., on, adjacent, or proximate) the upstream end 120. The first flow augmentation feature pattern 138A extends lengthwise and/or streamwise along a first axial portion 144A of the internal cooling passage 116 relative to the lengthwise axis 118. The second flow augmentation feature pattern 138B is disposed axially between the first flow augmentation feature pattern 138A and the third flow augmentation feature 138C pattern. The second flow augmentation feature pattern 138B extends lengthwise and/or streamwise along a second axial portion 144B of the internal cooling passage 116 relative to the lengthwise axis 118. The second flow augmentation feature pattern 138B is different than the first flow augmentation feature pattern 138A and the third flow augmentation feature pattern 138C. In other words, the second flow augmentation feature pattern 138B of the flow augmentation features 136 (e.g., sizes, shapes, orientations, etc. of the flow augmentation features 136) is different than the first flow augmentation feature pattern 138A of the flow augmentation features 136 and the third flow augmentation feature pattern 138C of the flow augmentation features 136. The third flow augmentation feature pattern 138C is disposed at (e.g., on, adjacent, or proximate) the downstream end 122. The third flow augmentation feature pattern 138C extends lengthwise and/or streamwise along a third axial portion 144C of the internal cooling passage 116 relative to the lengthwise axis 118. The third flow augmentation feature pattern 138C may be the same as the first flow augmentation feature pattern 138A as shown, for example, in FIG. 6. The shapes of the flow augmentation feature patterns 138, 138A-C of FIG. 6 are intended to schematically represent different flow augmentation features 136 of the flow augmentation feature patterns 138, 138A-C, and should not be otherwise understood to limit the types, configurations, structures, or combinations of the flow augmentation features 136 of the flow augmentation feature patterns 138, 138A-C.

In some embodiments, the axial portions 144A-C (e.g., the flow augmentation feature patterns 138, 138A-C) may have different axial lengths to facilitate improved air cooling and air flow 124 turbulation within the internal cooling passage 116. The first axial portion 144A may have a greater axial length than the second axial portion 144B and the third axial portion 144C. For example, the first axial portion 144A may be greater than 50 percent (50%) of the length L. The second axial portion 144B and the third axial portion 144C may each be between 10 percent (10%) and 30 percent (30%) of the length L. In some embodiments, lengths of the axial portions 144A-C may be based on a hydraulic diameter of the internal cooling passage 116. A length of the first axial portion 144A in the lengthwise or streamwise direction may be between 5 and 15 times a hydraulic diameter of the internal cooling passage 116 at (e.g., on, adjacent, or proximate) an upstream end of the first axial portion 144A. A length of the second axial portion 144B in the lengthwise or streamwise direction may be between 3 and 5 times a hydraulic diameter of the internal cooling passage 116 at (e.g., on, adjacent, or proximate) an upstream end of the second axial portion 144B. A length of the third axial portion 144C in the lengthwise or streamwise direction may be between 5 and 15 times a hydraulic diameter of the internal cooling passage 116 at (e.g., on, adjacent, or proximate) an upstream end of the third axial portion 144C.

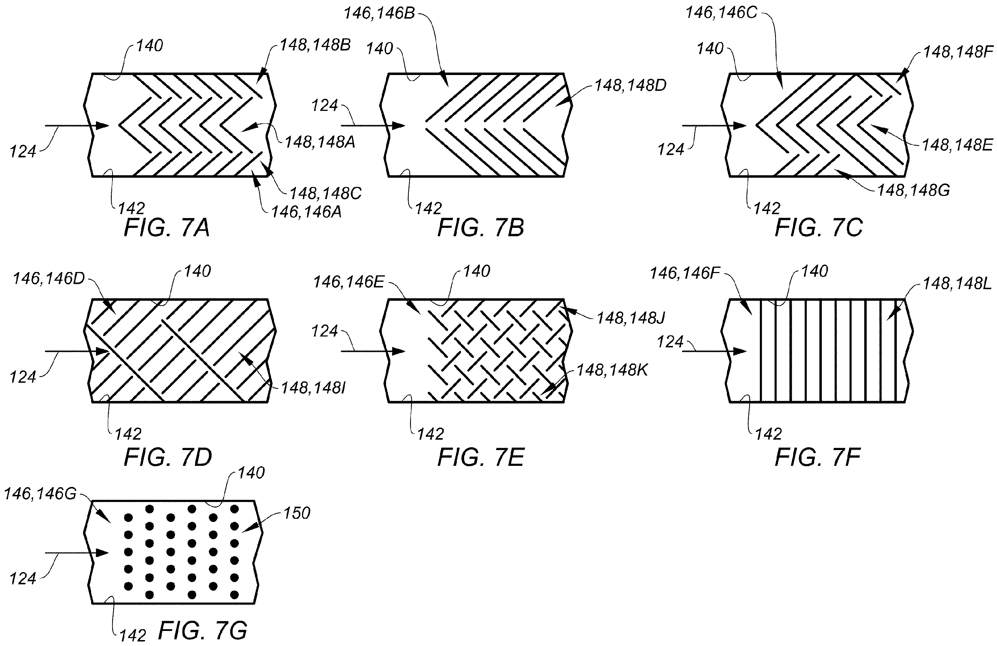

FIGS. 7A-G illustrate different exemplary flow augmentation feature patterns 146 (e.g., the flow augmentation feature patterns 138, 138A-C) of the flow augmentation features 136. The present disclosure, however, is not limited to the foregoing exemplary flow augmentation feature patterns. The flow augmentation feature patterns 146 of FIGS. 7A-F each include a plurality of trip strips 148. The trip strips 148 of the flow augmentation feature pattern 146A of FIG. 7A form a plurality of chevron trip strips 148A, a plurality of first lateral trip strips 148B, and a plurality of second lateral trip strips 148C. The chevron trip strips 148A may be continuous chevron trip strips, as shown in FIG. 7A, having transverse trip strip segments which intersect at a vertex. Alternatively, the chevron trip strips 148A may be discontinuous chevron trip strips (see FIG. 7B) where the trip strip segments do not intersect. The first lateral trip strips 148B may extend between the first lateral side wall 140 and the chevron trip strips 148A. Similarly, the second lateral trip strips 148C may extend between the second lateral side wall 142 and the chevron trip strips 148A. The first lateral trip strips 148B and the second lateral trip strips 148D may be oriented transverse to the adjacent trip strip segments of the chevron trip strips 148A. This pattern of the trip strips 148 of FIG. 7A may be referred to as a "tread" or "tire tread" flow augmentation feature pattern. The trip strips 148 of the flow augmentation feature pattern 146B of FIG. 7B form a plurality of chevron trip strips 148D. The chevron trip strips 148D may be continuous chevron trip strips or discontinuous trip strips, as described above. Each of the chevron trip strips 148D may extend to or substantially to the first lateral side wall 140 and the second lateral side wall 142. The trip strips 148 of the flow augmentation feature pattern 146C of FIG. 7C form a plurality of chevron trip strips 148E, a plurality of first lateral trip strips 148F, and a plurality of second lateral trip strips 148G. The chevron trip strips 148E may be continuous chevron trip strips or discontinuous trip strips, as described above. The first lateral trip strips 148F may extend between the first lateral side wall 140 and the chevron trip strips 148E. Similarly, the second lateral trip strips 148G may extend between the second lateral side wall 142 and the chevron trip strips 148E. The first lateral trip strips 148F may be axially offset from the second lateral trip strips 148G. The chevron trip strips 148E may extend to or substantially to the first lateral side wall 140 axially coincident with the second lateral trip strips 148G. Similarly, the chevron trip strips 148E may extend to or substantially to the second lateral side wall 142 axially coincident with the first lateral trip strips 148F. The first lateral trip strips 148F and the second lateral trip strips 148G may be oriented transverse to the adjacent trip strip segments of the chevron trip strips 148E. This pattern of the trip strips 148 of FIG. 7C may be referred to as a "skewed chevron" flow augmentation feature pattern. The trip strips 148 of the flow augmentation feature pattern 146D of FIG. 7D form a first plurality of transverse trip strips 148H and a second plurality of transverse trip strips 1481. The first plurality of transverse trip strips 148H are oriented substantially parallel to one another and transverse to the first lateral side wall 140 and the second lateral side wall 142. The second plurality of transverse trip strips 148I are oriented substantially parallel to one another and transverse to the first plurality of transverse trip strips 148H, the first lateral side wall 140, and the second lateral side wall 142. Each of the transverse trip strips 148I includes a plurality of trip strip segments separated by the first plurality of transverse trip strips 148H. This pattern of the trip strips 148 of FIG. 7D may be referred to as a "ladder" flow augmentation feature pattern. The trip strips 148 of the flow augmentation feature pattern 146E of FIG. 7E form a first plurality of transverse trip strips 148J and a second plurality of transverse trip strips 148K. The first plurality of transverse trip strips 148J are oriented substantially parallel to one another and transverse to the first lateral side wall 140 and the second lateral side wall 142. Each of the first plurality of transverse trip strips 148J includes a plurality of trip strip segments separated by the second plurality of transverse trip strips 148K. The second plurality of transverse trip strips 148I are oriented substantially parallel to one another and transverse to the first plurality of transverse trip strips 148H, the first lateral side wall 140, and the second lateral side wall 142. Each of the second plurality of transverse trip strips 148K includes a plurality of trip strip segments separated by the first plurality of transverse trip strips 148J. This pattern of the trip strips 148 of FIG. 7E may be referred to as a "lattice" flow augmentation feature pattern. The trip strips 148 of the flow augmentation feature pattern 146F of FIG. 7F form a plurality of trip strips 148L. The plurality of trip strips 148L are oriented substantially parallel to one another. The plurality of trip strips 148L extend widthwise within the internal cooling passage 116. The plurality of trip strips 148L may intersect the first lateral side wall 140 and the second lateral side wall 142, as shown in FIG. 7F, or otherwise extend a substantial portion of the width W. The flow augmentation feature pattern 146G of FIG. 7G includes a plurality of pin fins 150.

In one exemplary embodiment, the first flow augmentation feature pattern 138A and the third flow augmentation feature pattern 138C include a plurality of chevron trip strips such as the chevron trip strips 148A, 148D, 148E. For example, the first flow augmentation feature pattern 138A and the third flow augmentation feature pattern 138C may include the tread flow augmentation feature pattern 146A. The second flow augmentation feature pattern 138B may include the lattice flow augmentation feature pattern 146E.

During operation of the turbine section 60, the air flow 124 through the internal cooling passage 116 may gradually transition from a turbulent and/or chaotic toward a patterned and/or spiraling flow within the first axial portion 144A. This gradual transition of the air flow 124 stems from a consistent pattern (e.g., the first flow augmentation feature pattern 138A) of the flow augmentation feature assembly 134 within the first axial portion 144A. The different, second flow augmentation feature pattern 138B, downstream of the first flow augmentation feature pattern 138A, briefly interrupts the first flow augmentation feature pattern 138A and the third flow augmentation feature pattern 138C and increases air flow 124 turbulence within the internal cooling passage 116 as the air flow 124 passes from the first axial portion 144A into and through the second axial portion 144B, thereby improving air cooling of the segment body 90 and localized oxidation capability along the entire length L. The third flow augmentation feature pattern 138C, downstream of the second flow augmentation feature pattern 138B, may form an augmentation feature pattern which is the same as or similar to the first flow augmentation feature pattern 138A, and which may facilitate improved air-cooling characteristics relative to the second flow augmentation feature pattern 138B.

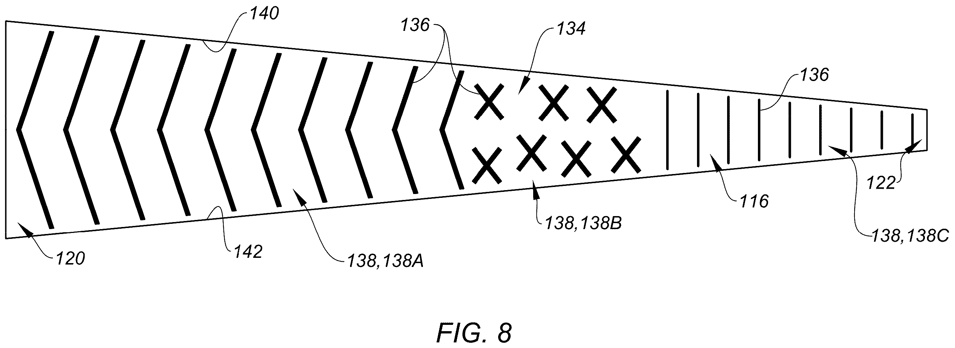

Referring to FIG. 8, in some embodiments, the third flow augmentation feature pattern 138C may be different than the first flow augmentation feature pattern 138A. In other words, each of the flow augmentation feature patterns 138, 138A-C of the flow augmentation feature assembly 134 may be different than each other flow augmentation feature pattern 138, 138A-C of the flow augmentation feature assembly 134. The shapes of the flow augmentation feature patterns 138, 138A-C of FIG. 8 are intended to schematically represent different flow augmentation features 136 of the flow augmentation feature patterns 138, 138A-C, and should not be otherwise understood to limit the types, configurations, structures, or combinations of the flow augmentation features 136 of the flow augmentation feature patterns 138, 138A-C.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An air-cooled turbine component comprising:
a body (90) extending between and to a first radial surface (112) and a second radial surface relative (114) to a centerline axis, the body (90) including an outer passage wall (126) and an inner passage wall (128) forming an internal cooling passage (116) between the first radial surface (112) and the second radial surface (114), the internal cooling passage (116) extending lengthwise through the body (90) between and to an upstream end (120) of the internal cooling passage (116) and a downstream end (122) of the internal cooling passage (116) along a lengthwise axis (118) of the internal cooling passage (116), the body (90) forming a flow augmentation feature assembly (134) at the inner passage wall (128) within the internal cooling passage (116), the flow augmentation feature assembly (134) including a first flow augmentation feature pattern (138A), a second flow augmentation feature pattern (138B), and a third flow augmentation feature pattern (138C),
the first flow augmentation feature pattern (138A) disposed at the upstream end (120), the first flow augmentation feature pattern (138A) extending lengthwise along a first axial portion (144A) of the internal cooling passage (116) relative to the lengthwise axis (118),
the second flow augmentation feature pattern (138B) disposed axially between the first flow augmentation feature pattern (138A) and the third flow augmentation feature pattern (138C) and extending lengthwise along a second axial portion (144B) of the internal cooling passage (116) relative to the lengthwise axis (118), the second flow augmentation feature pattern (138B) being different than the first flow augmentation feature pattern (138A) and the third flow augmentation feature pattern (138C), and
the third flow augmentation feature pattern (138C) disposed at the downstream end (122), the third flow augmentation feature pattern (138C) extending lengthwise along a third axial portion (144C) of the internal cooling passage (116) relative to the lengthwise axis (118).

2. The air-cooled turbine component of claim 1, wherein the body (90) extends circumferentially between a first circumferential end (96) and a second circumferential end (98) relative to the centerline axis, and the internal cooling passage (116) extends lengthwise between the first circumferential end (96) and the second circumferential end (98).

3. The air-cooled turbine of claim 1 or 2, wherein the internal cooling passage (116) has a length extending between and to the upstream end (120) and the downstream end (122) along the lengthwise axis (118), and each of the second axial portion (144B) and the third axial portion (144C) is between 10 percent and 30 percent of the length.

4. The air-cooled turbine of claim 1, 2 or 3, wherein the internal cooling passage (116) has a or the length extending between and to the upstream end (120) and the downstream end (122) along the lengthwise axis (118), and the first axial portion (144A) is greater than 50 percent of the length.

5. A blade outer air seal, BOAS, segment comprising:
a segment body (90) extending between and to an outer radial surface (112) and an inner radial surface (114) relative to a BOAS (86) axis, the segment body (90) including an outer passage wall (126) and an inner passage wall (128) forming an internal cooling passage (116) between the outer radial surface (112) and the inner radial surface (114), the internal cooling passage (116) extending lengthwise through the segment body (90) between and to an upstream end (120) of the internal cooling passage (116) and a downstream end (122) of the internal cooling passage (116) along a lengthwise axis (118) of the internal cooling passage (116), the segment body (90) forming a flow augmentation feature assembly (134) at the inner passage wall (128) within the internal cooling passage (116), the flow augmentation feature assembly (134) including a first flow augmentation feature pattern (138A) and a second flow augmentation feature pattern (138B),
the first flow augmentation feature pattern (138A) disposed at the upstream end (120), the first flow augmentation feature pattern (138A) extending lengthwise along a first axial portion (144A) of the internal cooling passage (116) relative to the lengthwise axis (118), the first axial portion (144A) greater than 50 percent of the length, and
the second flow augmentation feature pattern (138B) disposed downstream of the first flow augmentation feature pattern (138A) and extending lengthwise along a second axial portion (144B) of the internal cooling passage (116) relative to the lengthwise axis (118), the second flow augmentation feature pattern (138B) different than the first flow augmentation feature pattern (138A).

6. The BOAS segment of claim 5, wherein the flow augmentation feature assembly (134) further includes a third flow augmentation feature pattern (138C) downstream of the second flow augmentation feature pattern (138B), and the third flow augmentation feature pattern (138C) is the same as the first flow augmentation feature pattern (138A).

7. A blade outer air seal, BOAS, segment comprising:
a segment body (90) extending between and to an outer radial surface (112) and an inner radial surface (114) relative to a BOAS axis, the segment body (90) forming an internal cooling passage (116) between the outer radial surface (112) and the inner radial surface (114), the internal cooling passage (116) extending through the segment body (90) between and to an upstream end (120) of the internal cooling passage (116) and a downstream end (122) of the internal cooling passage (116), the segment body (90) forming a flow augmentation feature assembly (134) within the internal cooling passage (116), the flow augmentation feature assembly (134) including a first flow augmentation feature pattern (138A) and a second flow augmentation feature pattern (138B),
the first flow augmentation feature pattern (138A) disposed at the upstream end (120), the first flow augmentation feature pattern (138A) disposed at a first portion of the internal cooling passage (116),
the second flow augmentation feature pattern (138B) disposed axially between the first flow augmentation feature pattern (138A) and the third flow augmentation feature pattern (138C), the second flow augmentation feature pattern (138B) disposed at a second portion of the internal cooling passage (116), the second flow augmentation feature pattern (138B) different than the first flow augmentation feature pattern (138A) and the third flow augmentation feature pattern (138C), and
the third flow augmentation feature pattern (138C) disposed at the downstream end (122), the third flow augmentation feature pattern (138C) disposed at a third portion of the internal cooling passage (116).

8. The air-cooled turbine component or BOAS segment of any of claims claim 1-4, 6 or 7, wherein the first flow augmentation feature pattern (138A) is the same as the third flow augmentation feature pattern (138C).

9. The air-cooled turbine component or BOAS segment of any of claims 1-4, 6 or 7, wherein the first flow augmentation feature pattern (138A) is different than the third flow augmentation feature pattern (138C).

10. The air-cooled turbine component or BOAS segment of any of claims 1-4 or 6-9, wherein the first flow augmentation feature pattern (138A) and the third flow augmentation feature pattern (138C) each include a plurality of chevron trip strips (148A, 148D, 148E).

11. The air-cooled turbine component or BOAS segment of any preceding claim, wherein the second flow augmentation feature pattern (138B) is a lattice pattern.

12. The air-cooled turbine component or BOAS segment of any preceding claim, wherein the internal cooling passage (116) has a width substantially orthogonal to the lengthwise axis (118) and the width decreases in a lengthwise direction from the upstream end (120) to the downstream end (122).

13. The air-cooled turbine component or BOAS segment of any preceding claim, wherein the internal cooling passage (116) has a height between the outer passage wall (126) and the inner passage wall (128), and the flow augmentation feature assembly (134) extends between 10 percent and 30 percent of the height from the inner passage wall (128) toward the outer passage wall (126).

14. The air-cooled turbine component or BOAS segment of any preceding claim, wherein the body (90) forms an outlet aperture (132) at the downstream end (122), and the outlet aperture (132) extends between and to the internal cooling passage (116) and an exterior of the segment body (90).
